# EUROPEAN PATENT APPLICATION

(11) **EP 4 575 682 A1**
(43) Date of publication of application: **25.06.2025**
(21) Application number: 23865789.4
(22) Date of filing: 06.09.2023
(51) Int. Cl.: G05B 13/04, G05D 7/06, G06N 20/00, H01M 4/04, H01M 4/139

(54) **CONTROL FACTOR CALCULATION DEVICE AND METHOD OF OPERATION THEREFOR**

(30) Priority: 15.09.2022 KR 20220116615; 11.04.2023 KR 20230047518
(71) Applicant: LG Energy Solution, Ltd., Seoul 07335 (KR)
(72) Inventor: SEO, Dong Min, Daejeon 34122 (KR); PARK, Wi Dae, Daejeon 34122 (KR); KIM, Min Su, Daejeon 34122 (KR); PARK, Jong Seok, Daejeon 34122 (KR); PARK, Dong Wook, Daejeon 34122 (KR); KIM, Seol Hee, Daejeon 34122 (KR); JO, Eun Ji, Daejeon 34122 (KR); YUN, Suk Yeong, Daejeon 34122 (KR); HAM, Kyung Ho, Daejeon 34122 (KR)
(74) Representative: BCKIP Part mbB
(86) International application number: PCT/KR2023/013353
(87) International publication number: WO 2024/058491

(57) **Abstract**

A control factor calculation apparatus according to an embodiment disclosed herein includes a data obtaining unit configured to periodically obtain data including a slurry loading amount and a slurry flow rate and a processor configured to learn a correlation between the slurry loading amount and the slurry flow rate, based on the data, in which the processor is further configured to calculate a slurry flow rate control value for achieving a target slurry loading amount based on the correlation.

## Description

### [TECHNICAL FIELD]

### CROSS-REFERENCE TO RELATED APPLICATION

This application claims priority to and the benefit of Korean Patent Application No. 10-2022-0116615 filed in the Korean Intellectual Property Office on September 15, 2022, and Korean Patent Application No. 10-2023-0047518 filed in the Korean Intellectual Property Office on April 11, 2023, the entire contents of which are incorporated herein by reference.

### TECHNICAL FIELD

Embodiments disclosed herein relate to a control factor calculation apparatus and an operating method thereof.

### [BACKGROUND ART]

Recently, research and development of secondary batteries have been actively performed. Herein, the secondary batteries, which are chargeable/dischargeable batteries, may include all of conventional nickel (Ni)/cadmium (Cd) batteries, Ni/metal hydride (MH) batteries, etc., and recent lithium-ion batteries. Among the secondary batteries, a lithium-ion battery has a much higher energy density than those of the conventional Ni/Cd batteries, Ni/MH batteries, etc. Moreover, the lithium-ion battery may be manufactured to be small and lightweight, such that the lithium-ion battery has been used as a power source of mobile devices, and recently, a use range thereof has been extended to power sources for electric vehicles, attracting attention as next-generation energy storage media.

As the field of application for lithium-ion batteries expands, demands for higher capacity secondary batteries are rapidly increasing. Electrodes for secondary batteries are manufactured by coating an electrode slurry on a current collector and then performing a drying and rolling process. During an electrode manufacturing process, high-level coating uniformity is required to improve the quality of electrode slurry coating. For this coating uniformity, a method is used to improve coating uniformity by controlling certain factors (e.g., slurry discharge pump revolution per minute (RPM), temperature, etc.) when an error occurs between a slurry loading amount and a target loading amount.

### [DISCLOSURE]

### [TECHNICAL PROBLEM]

Embodiments disclosed herein aim to provide a control factor calculation apparatus and an operating method thereof in which a control factor for achieving a target slurry loading amount is recommended according to a situation.

Embodiments disclosed herein aim to provide a control factor calculation apparatus and an operating method thereof in which a slurry flow rate control value for reducing a time to reach a target slurry loading amount is recommended as a control factor for achieving the target slurry loading amount.

Technical problems of the embodiments disclosed herein are not limited to the above-described technical problems, and other unmentioned technical problems would be clearly understood by one of ordinary skill in the art from the following description.

### [TECHNICAL SOLUTION]

A control factor calculation apparatus according to an embodiment disclosed herein includes a data obtaining unit configured to periodically obtain data including a slurry loading amount and a slurry flow rate and a processor configured to learn a correlation between the slurry loading amount and the slurry flow rate, based on the data, in which the processor is further configured to calculate a slurry flow rate control value for achieving a target slurry loading amount based on the correlation.

In the control factor calculation apparatus according to an embodiment disclosed herein, the processor may be further configured to learn a first correlation between first data including a slurry loading amount for a period of N and a slurry flow rate for a period of (N+1) and second data including a slurry loading amount for the period of (N+1) and calculate the slurry flow rate control value based on the first correlation.

In the control factor calculation apparatus according to an embodiment disclosed herein, the processor may be further configured to calculate the slurry flow rate control value based on the slurry loading amount for the period of (N+1), a slurry loading amount for the period of (N+1) corresponding to the target slurry loading amount, and the first correlation.

In the control factor calculation apparatus according to an embodiment disclosed herein, the data may further include a slurry pump revolution per minute (RPM), and the processor may be further configured to learn a second correlation between slurry flow rate change data and slurry pump RPM change data according to a period change and calculate a slurry pump RPM control value for achieving the flow rate control value, based on the second correlation.

In the control factor calculation apparatus according to an embodiment disclosed herein, the data may further include a gap between a slurry discharging device and a base material.

In the control factor calculation apparatus according to an embodiment disclosed herein, the processor may be further configured to learn the correlation based on a machine learning model or a deep learning model.

A control factor calculation method according to an embodiment disclosed herein includes periodically obtaining data including a slurry loading amount and a slurry flow rate, learning a correlation between the slurry loading amount and the slurry flow rate, based on the data, and calculating a slurry flow rate control value for achieving a target slurry loading amount based on the correlation.

In the control factor calculation method according to an embodiment disclosed herein, the learning of the correlation may include learning a first correlation between first data including a slurry loading amount for a period of N and a slurry loading amount for a period of (N+1) and second data including a slurry flow rate for the period of (N+1), and the calculating of the slurry flow rate control value may include calculating the slurry flow rate control value based on the first correlation.

In the control factor calculation method according to an embodiment disclosed herein, the calculating of the slurry flow rate control value may include calculating the slurry flow rate control value based on the slurry loading amount for the period of (N+1), a slurry loading amount for the period of (N+1) corresponding to the target slurry loading amount, and the first correlation.

In the control factor calculation method according to an embodiment disclosed herein, the data may further include a slurry pump revolution per minute (RPM), and the learning of the correlation may include learning a second correlation between slurry flow rate change data and slurry pump RPM change data according to a period change, and the calculating of the slurry pump RPM control value may include calculating a slurry pump RPM control value for achieving the flow rate control value, based on the second correlation.

In the control factor calculation method according to an embodiment disclosed herein, the data may further include a gap between a slurry discharging device and a base material.

In the control factor calculation method according to an embodiment disclosed herein, the learning of the correlation may include learning the correlation based on a machine learning model or a deep learning model.

### [ADVANTAGEOUS EFFECTS]

According to embodiments disclosed herein, a control factor for achieving a target slurry loading amount may be calculated based on a correlation using a slurry loading amount, a slurry flow rate, a gap between a slurry discharging device and a base material, and/or a slurry discharging pump revolution per minute (RPM).

According to embodiments disclosed herein, a slurry flow rate control value and/or a slurry pump RPM control value control factor for achieving a target slurry loading amount may be calculated as a control factor to allow a user to use the control factor according to a situation.

Moreover, various effects recognized directly or indirectly from the disclosure may be provided.

### [DESCRIPTION OF DRAWINGS]

FIG. 1 is a block diagram of a control factor calculation apparatus according to an embodiment.
FIG. 2A is a view showing a first correlation according to an embodiment.
FIG. 2B is a view showing a second correlation according to an embodiment.
FIG. 3 is an operating flowchart of a control factor calculation apparatus according to an embodiment.

### [MODE FOR INVENTION]

Hereinafter, various embodiments of the present disclosure will be described with reference to the accompanying drawings. However, the description is not intended to limit the present disclosure to particular embodiments, and it should be construed as including various modifications, equivalents, and/or alternatives according to the embodiments of the present disclosure.

It should be appreciated that various embodiments of the present document and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Such terms as "1^{st}", "2^{nd}," "first", "second", "A", "B", "(a)", or "(b)" may be used to simply distinguish a corresponding component from another, and does not limit the components in other aspect (e.g., importance or order), unless mentioned otherwise.

Herein, it is to be understood that when an element (e.g., a first element) is referred to, with or without the term "operatively" or "communicatively", as "connected with", "coupled with", or "linked with", or "coupled to" or "connected to" to another element (e.g., a second element), it means that the element may be connected with the other element directly (e.g., wiredly), wirelessly, or via a third element.

According to an embodiment of the disclosure, a method according to various embodiments of the disclosure disclosed herein may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store, or between two user devices directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

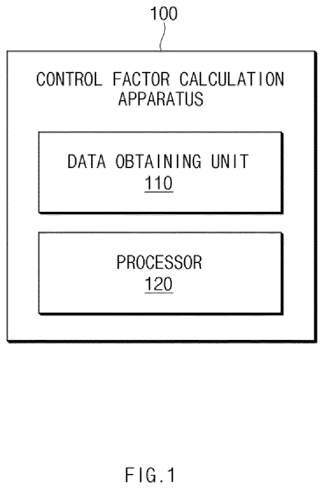

FIG. 1 is a block diagram of a control factor calculation apparatus according to an embodiment.

Referring to FIG. 1, a control factor calculation apparatus 100 may include a data obtaining unit 110 and/or a processor 120.

The data obtaining unit 110 may wiredly or wirelessly transmit and receive data to and from an external device and/or an external server. According to an embodiment, the data obtaining unit 110 may periodically obtain data including a slurry loading amount, a slurry flow rate, a slurry discharging pump revolution per minute (RPM), and/or a gap between a slurry discharging device and a base material. Herein, a slurry may refer to a mixture of solid and liquid or a composition in which fine solid powder particles are suspended in a liquid solvent. For example, the slurry may mean a composition for forming electrodes. The slurry loading amount may refer to the amount of slurry coated per unit area of the base material. The slurry flow rate may mean the amount of slurry supplied to the base material by a slurry discharging device. The slurry pump RPM may refer to an output speed of a pump embedded in the slurry discharging device.

According to an embodiment, the data obtaining unit 110 may transfer the obtained data to the processor 120.

The processor 120 may execute software to control at least one another component connected to the processor 120 and may process or compute various data. According to an embodiment, the processor 120 may control at least one another component connected to the processor 120 to perform an overall operation of the control factor calculation apparatus 110. The processor 120 may include at least one of processing devices such as an application specific integrated circuit (ASIC), a digital signal processor (DSP), programmable logic devices (PLD), field programmable gate arrays (FPGAs), a central processing unit (CPU), microcontrollers, or microprocessors.

According to an embodiment, the processor 120 may learn a correlation between factors of at least two types of the slurry loading amount, the slurry flow rate, the gap between the slurry discharging device and the base material, and/or the slurry pump RPM, based on data obtained through the data obtaining unit 110.

According to an embodiment, the processor 120 may learn a first correlation between first data including a slurry loading amount for a period of N and a slurry flow rate for a period of (N+1) and second data including the slurry loading amount for the period of (N+1). According to an embodiment, the first data may further include gap data between the slurry discharging device and the base material for the period of (N+1). However, without being limited thereto, the first data may include various data related to electrode slurry coating to improve the accuracy of a learning model related to the first correlation.

According to an embodiment, the processor 120 may learn a second correlation between slurry flow rate change data and slurry pump RPM change data according to a period change. According to an embodiment, the slurry flow rate change (or slurry pump RPM change) may mean a difference between slurry flow rates (or slurry pump RPM values) of two adjacent periods. For example, the slurry flow rate change (or the slurry pump RPM change) may mean a difference between a slurry flow rate (or slurry pump RPM value) for the period N and the slurry flow rate (or the slurry pump RPM value) of the period of (N+1).

According to an embodiment, the processor 120 may learn a correlation (e.g., a first correlation and/or a second correlation) based on a machine learning model or a deep learning model.

According to an embodiment, the processor 120 may calculate a slurry flow rate control value and/or a slurry pump RPM control value for achieving a target slurry loading amount.

According to an embodiment, the processor 120 may calculate a slurry flow rate control value based on the first correlation. According to an embodiment, the processor 120 may calculate a slurry flow rate control value for achieving the target slurry loading amount, based on the first correlation. Herein, the slurry flow rate control value may mean a slurry flow rate increase value or a slurry flow rate decrease value to achieve the target slurry loading amount. According to an embodiment, the processor 120 may calculate the slurry flow rate control value for achieving the target slurry loading amount, based on the slurry loading amount for the period of (N+1), the target slurry loading amount (e.g., a slurry loading amount for a period of (N+2)), and the first correlation. For example, the processor 120 may calculate the slurry flow rate for the period of (N+2), required for achieving the target slurry loading amount. The processor 120 may calculate the slurry flow rate control value based on a difference between a slurry flow rate for the period of (N+2) and the slurry flow rate for the period of (N+1).

According to an embodiment, the processor 120 may calculate the slurry flow rate control value for achieving the target slurry loading amount, based on the slurry loading amount for the period of (N+1), the target slurry loading amount (e.g., a slurry loading amount for a period of (N+2)), the gap between the slurry discharging device and the base material for the period of (N+2), and the first correlation.

According to an embodiment, the processor 120 may calculate a slurry pump RPM control value based on the first correlation. According to an embodiment, the processor 120 may calculate a slurry pump RPM control value for achieving the slurry flow rate control value based on the first correlation. Herein, the slurry pump RPM control value may mean a slurry pump RPM increase value or a slurry pump RPM decrease value for achieving the calculated slurry flow rate control value.

According to an embodiment, the processor 120 may calculate a slurry pump RPM control value based on the slurry flow rate control value and the second correlation. For example, the processor 120 may calculate the slurry pump RPM control value between the period of (N+1) and the period of (N+2) based on the slurry flow rate control value between the period of (N+1) and the period of (N+2) and the second correlation.

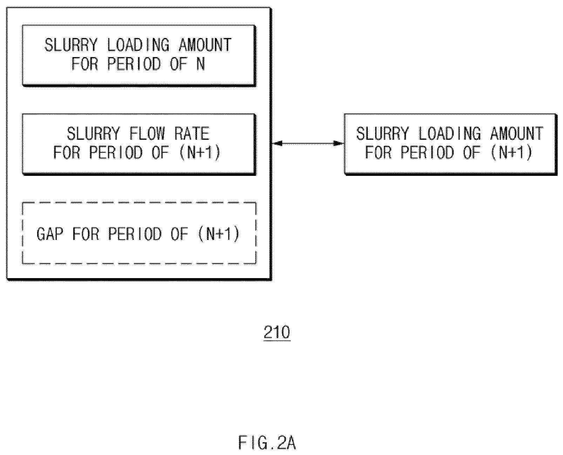

FIG. 2A illustrates the first correlation according to an embodiment. FIG. 2A may be described using components of FIG. 1.

Referring to FIG. 2A, a first correlation 210 may mean a correlation among the slurry loading amount for the period of N, the slurry flow rate for the period of (N+1), the gap between the slurry discharging device and the base material for the period of (N+1), and the slurry loading amount for the period of (N+1).

According to an embodiment, the gap between the slurry discharging device and the base material for the period of (N+1) may be excluded from a factor of the first correlation 210. In this case, the processor 120 may calculate the other one factor based on two factors among the slurry loading amount for the period of N, the slurry flow rate for the period of (N+1), or the slurry loading amount for the period of (N+1). For example, the processor 120 may calculate the slurry flow rate for the period of (N+1) based on the slurry loading amount for the period of N, the slurry loading amount for the period of (N+1), and the first correlation 210.

According to an embodiment, the first correlation 210 may include, as factors, the slurry loading amount for the period of N, the slurry flow rate for the period of (N+1), the gap for the period of (N+1), and the slurry loading amount for the period of (N+1). In this case, the processor 120 may calculate the other one factor based on three factors among the slurry loading amount for the period of N, the slurry flow rate for the period of (N+1), the gap for the period of (N+1), or the slurry loading amount for the period of (N+1). For example, the processor 120 may calculate the slurry flow rate for the period of (N+1) based on the slurry loading amount for the period of N, the gap for the period of (N+1), the slurry loading amount for the period of (N+1), and the first correlation 210.

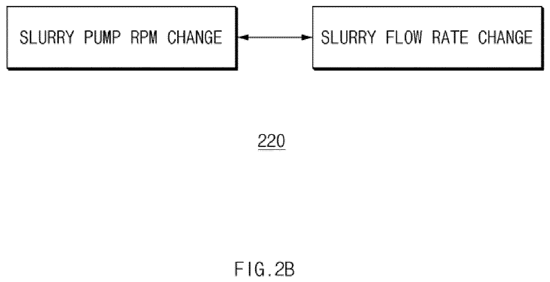

FIG. 2B is a view showing a second correlation according to an embodiment. FIG. 2B may be described using components of FIG. 1.

Referring to FIG. 2B, a second correlation 220 may mean a correlation between a slurry pump RPM change and a slurry flow rate change.

According to an embodiment, the processor 120 may calculate the other one factor based on one factor between the slurry pump RPM change or the slurry flow rate change. For example, the processor 120 may calculate the slurry pump RPM change based on the slurry flow rate change and the second correlation 220.

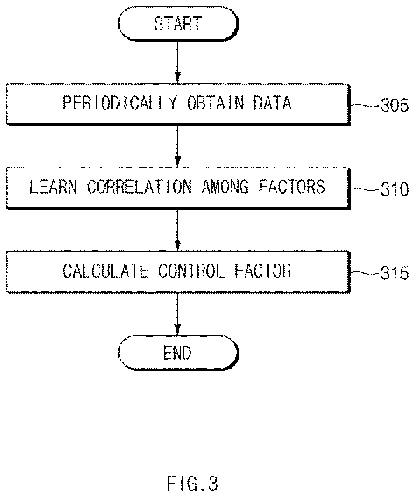

FIG. 3 is an operating flowchart of a control factor calculation apparatus according to an embodiment. FIG. 3 will be described using components of FIG. 1.

The embodiment shown in FIG. 3 may be an example, and an order of operations according to various embodiments of the present disclosure may be different from that shown in FIG. 3, and some operations shown in FIG. 3 may be omitted, the order of the operations may be changed, or the operations may be merged.

Referring to FIG. 3, in operation 305, the control factor calculation apparatus 100 may periodically obtain data.

According to an embodiment, the control factor calculation apparatus 100 may periodically obtain data including a slurry loading amount, a slurry flow rate, a slurry discharging pump RPM, and/or a gap between a slurry discharging device and a base material.

In operation 310, the control factor calculation apparatus 100 may learn a correlation.

According to an embodiment, the control factor calculation apparatus 100 may learn a correlation between factors of at least two types of the slurry loading amount, the slurry flow rate, the gap between the slurry discharging device and the base material, and/or the slurry pump RPM, based on data obtained in operation 305.

According to an embodiment, the control factor calculation apparatus 100 may learn the first correlation between the first data including the slurry loading amount for the period of N and the slurry flow rate for the period of (N+1) and the second data including the slurry loading amount for the period of (N+1). According to an embodiment, the first data may further include the gap data between the slurry discharging device and the base material for the period of (N+1). However, without being limited thereto, the first data may include various data related to electrode slurry coating to improve the accuracy of a learning model related to the first correlation.

According to an embodiment, the control factor calculation apparatus 100 may learn the second correlation between the slurry flow rate change data and the slurry pump RPM change data according to a period change. According to an embodiment, the slurry flow rate change (or slurry pump RPM change) may mean a difference between slurry flow rates (or slurry pump RPM values) of two adjacent periods. For example, the slurry flow rate change (or the slurry pump RPM change) may mean a difference between a slurry flow rate (or slurry pump RPM value) for the period N and the slurry flow rate (or the slurry pump RPM value) of the period of (N+1).

According to an embodiment, the control factor calculation apparatus 100 may learn a correlation (e.g., a first correlation and/or a second correlation) based on a machine learning model or a deep learning model.

In operation 315, the control factor calculation apparatus 100 may calculate a control factor.

According to an embodiment, the control factor calculation apparatus 100 may calculate the slurry flow rate control value and/or the slurry pump RPM control value for achieving the target slurry loading amount.

According to an embodiment, the control factor calculation apparatus 100 may calculate the slurry flow rate control value based on the first correlation learned in operation 310. According to an embodiment, the control factor calculation apparatus 100 may calculate the slurry flow rate control value for achieving the target slurry loading amount, based on the first correlation. Herein, the slurry flow rate control value may mean the slurry flow rate increase value or the slurry flow rate decrease value to achieve the target slurry loading amount. According to an embodiment, the control factor calculation apparatus 100 may calculate the slurry flow rate control value for achieving the target slurry loading amount, based on the slurry loading amount for the period of (N+1), the target slurry loading amount (e.g., the slurry loading amount for the period of (N+2)), and the first correlation. For example, the control factor calculation apparatus 100 may calculate the slurry flow rate for the period of (N+2), required for achieving the target slurry loading amount. The control factor calculation apparatus 100 may calculate the slurry flow rate control value based on the difference between the slurry flow rate for the period of (N+2) and the slurry flow rate for the period of (N+1).

According to an embodiment, the control factor calculation apparatus 100 may calculate the slurry flow rate control value for achieving the target slurry loading amount, based on the slurry loading amount for the period of (N+1), the target slurry loading amount (e.g., the slurry loading amount for the period of (N+2)), the gap between the slurry discharging device and the base material for the period of (N+2), and the first correlation.

According to an embodiment, the control factor calculation apparatus 100 may calculate the slurry pump RPM control value based on the second correlation learned in operation 310. According to an embodiment, the control factor calculation apparatus 100 may calculate the slurry pump RPM control value for achieving the slurry flow rate control value based on the first correlation. Herein, the slurry pump RPM control value may mean the slurry pump RPM increase value or the slurry pump RPM decrease value for achieving the calculated slurry flow rate control value.

According to an embodiment, the control factor calculation apparatus 100 may calculate the slurry pump RPM control value based on the slurry flow rate control value and the second correlation. For example, the control factor calculation apparatus 100 may calculate the slurry pump RPM control value between the period of (N+1) and the period of (N+2) based on the slurry flow rate control value between the period of (N+1) and the period of (N+2) and the second correlation.

Terms such as "include", "constitute" or "have" described above may mean that the corresponding component may be inherent unless otherwise stated, and thus should be construed as further including other components rather than excluding other components. All terms including technical or scientific terms have the same meanings as those generally understood by those of ordinary skill in the art to which the embodiments disclosed herein pertain, unless defined otherwise. The terms used generally like terms defined in dictionaries should be interpreted as having meanings that are the same as the contextual meanings of the relevant technology and should not be interpreted as having ideal or excessively formal meanings unless they are clearly defined in the present document.

## Claims

1. A control factor calculation apparatus comprising:
a data obtaining unit configured to periodically obtain data comprising a slurry loading amount and a slurry flow rate; and
a processor configured to learn a correlation between the slurry loading amount and the slurry flow rate, based on the data,
wherein the processor is further configured to calculate a slurry flow rate control value for achieving a target slurry loading amount based on the correlation.

2. The control factor calculation apparatus of claim 1, wherein the processor is further configured to:
learn a first correlation between first data comprising a slurry loading amount for a period of N and a slurry flow rate for a period of (N+1) and second data comprising a slurry loading amount for the period of (N+1); and
calculate the slurry flow rate control value based on the first correlation.

3. The control factor calculation apparatus of claim 2, wherein the processor is further configured to calculate the slurry flow rate control value based on the slurry loading amount for the period of (N+1), a slurry loading amount for the period of (N+1) corresponding to the target slurry loading amount, and the first correlation.

4. The control factor calculation apparatus of claim 2, wherein the data further comprises a slurry pump revolution per minute (RPM), and
the processor is further configured to:
learn a second correlation between slurry flow rate change data and slurry pump RPM change data according to a period change; and
calculate a slurry pump RPM control value for achieving the flow rate control value, based on the second correlation.

5. The control factor calculation apparatus of claim 1, wherein the data further comprises a gap between a slurry discharging device and a base material.

6. The control factor calculation apparatus of claim 1, wherein the processor is further configured to learn the correlation based on a machine learning model or a deep learning model.

7. A control factor calculation method comprising:
periodically obtaining data comprising a slurry loading amount and a slurry flow rate;
learning a correlation between the slurry loading amount and the slurry flow rate, based on the data; and
calculating a slurry flow rate control value for achieving a target slurry loading amount based on the correlation.

8. The control factor calculation method of claim 7, wherein the learning of the correlation comprises learning a first correlation between first data comprising a slurry loading amount for a period of N and a slurry flow rate for a period of (N+1) and second data comprising a slurry loading amount for the period of (N+1), and
the calculating of the slurry flow rate control value comprises calculating the slurry flow rate control value based on the first correlation.

9. The control factor calculation method of claim 8, wherein the calculating of the slurry flow rate control value comprises calculating the slurry flow rate control value based on the slurry loading amount for the period of (N+1), a slurry loading amount for the period of (N+1) corresponding to the target slurry loading amount, and the first correlation.

10. The control factor calculation method of claim 8, wherein the data further comprises a slurry pump revolution per minute (RPM),
the learning of the correlation comprises learning a second correlation between slurry flow rate change data and slurry pump RPM change data according to a period change, and
the calculating of the slurry pump RPM control value comprises calculating a slurry pump RPM control value for achieving the flow rate control value, based on the second correlation.

11. The control factor calculation method of claim 7, wherein the data further comprises a gap between a slurry discharging device and a base material.

12. The control factor calculation method of claim 7, wherein the learning of the correlation comprises learning the correlation based on a machine learning model or a deep learning model.
